# EUROPEAN PATENT SPECIFICATION

(11) **EP 2 564 752 B1**
(45) Date of publication and mention of the grant of the patent: **03.02.2016**
(21) Application number: 12182602.8
(22) Date of filing: 31.08.2012
(51) Int. Cl.: A47L 15/42

(54) **Water-softening device with closed-loop regeneration**
Wasserenthärtungsvorrichtung mit Aufbereitung im geschlossenen Kreislauf
Dispositif d'adoucissement d'eau avec régénération en boucle fermée

(30) Priority: 02.09.2011 IT TO20110787
(43) Date of publication of application: 06.03.2013
(73) Proprietor: BITRON S.p.A., 10122 Torino (IT)
(72) Inventor: Brignone, Enzo, I-12025 Fraz. Monastero - DRONERO (Cuneo) (IT)
(74) Representative: Gerbino, Angelo

(56) References cited:
- WO-A1-03/087460
- FR-A1- 2 072 142

## Description

The present invention relates to a water-softening device for softening water supplied to an electrical household washing machine, such as a dishwasher or a washing machine for laundry purposes.

More specifically, this device comprises:
- a first tank for containing substances with water-softening properties,
- a second salt-containing tank, having at least one water inlet opening, and
- a first conduit which connects the second tank to the first tank and through which there flows a brine formed by the dissolution of the salt in water and intended for regenerating said water-softening substances.

The operating cycle of this device is such that, after a predetermined number of passages of supplied water through the water-softening substances, the latter, which are typically ion exchange resins, are regenerated by the passage of the aforementioned brine.

According to a known method, the water intended to form the brine is collected in a container placed upstream of the salt tank, into which it is then made to descend by gravity. The resulting brine is then sent through the first conduit into the tank containing the water-softening substances, where its regenerative action takes place.

A known device of this kind therefore requires the presence of an additional component such as the aforesaid container, leading to additional costs for its production and assembly.

On the other hand, WO 03/087 460 A1 discloses a water-softening device having the features disclosed in the preamble of claim 1 which follows.

An object of the present invention is to provide a water-softening device which is an improvement on the known devices, and which, in particular, is free of the aforementioned drawbacks.

According to the invention, this object is achieved by means of a water-softening device having the features disclosed in claim 1 which follows.

In the device according to the invention, therefore, the container for collecting the water intended for the formation of the brine can be omitted. Instead, the brine is drawn directly from the first tank by means of the pump which sends it through the second conduit into the salt tank. Here the brine is formed and then flows through the first conduit into the second tank where its regenerative action takes place.

The regeneration process therefore takes place in a closed loop formed by the aforementioned two tanks and two conduits, instead of by means of a flow of brine passing through the resin tank and being discharged continuously therefrom to the outside.

This procedure therefore provides the double benefit of reducing the water consumption required for regeneration and allowing the regeneration to take place simultaneously with the washing cycle. This is because the brine is formed by using the water originally present in the resin tank, which in the prior art would simply have been discharged without serving any useful purpose, and the brine produced using the water recovered in this way is continuously recycled.

A further subject of the present invention is an electrical household washing machine comprising a water-softening device of the type described above.

Further advantages and characteristics of the present invention will be made clear by the following detailed description, which refers to the attached drawings provided by way of non-limiting example, in which:
Figure 1 is a schematic view of a device according to the invention during the step of water softening,
Figure 2 is a schematic illustration of the device of Figure 1 during the step of regeneration of the resins, and
Figure 3 is a schematic illustration of a pump forming part of the device of the preceding figures.

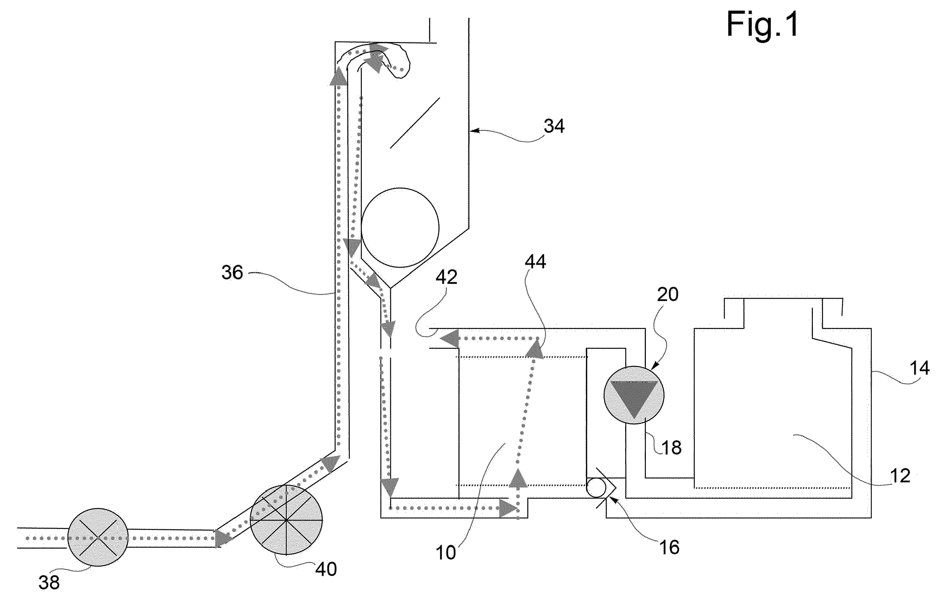

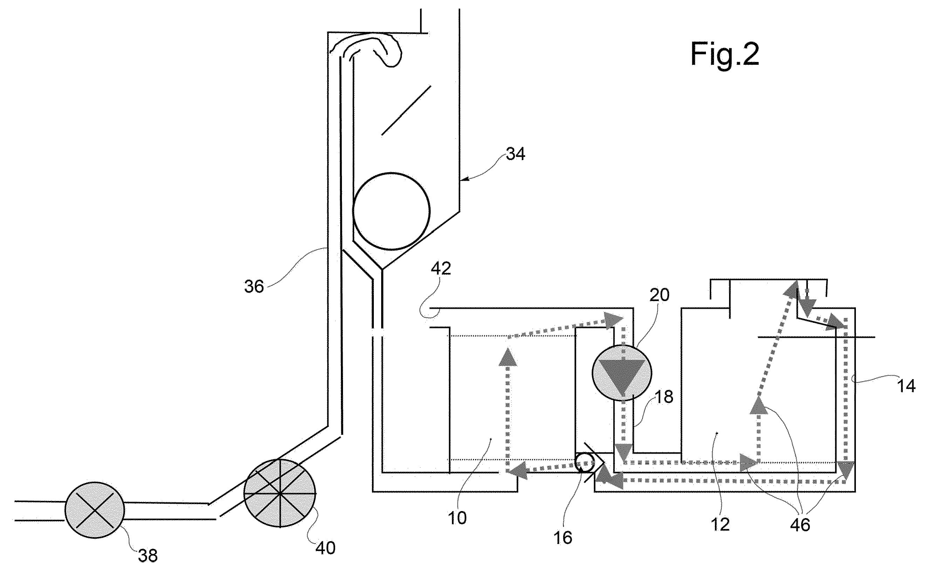

A water-softening device for softening the water supplied to an electrical household appliance comprises (Figures 1 and 2) a first tank 10 for containing substances with water-softening properties and a second salt-containing tank 12.

A first conduit 14 connects the top of the second tank 12 to the bottom of the first tank 10. A one-way valve 16 is located in the conduit 14, allowing a flow from the second tank 12 towards the first tank 10 and not in the opposite direction.

A second conduit 18 connects the top of the first tank 10 to an opening in the proximity of the bottom of the second tank 12. A pump 20, advantageously of the peristaltic or membrane type, capable of selectively creating a flow of water from the first tank 10 to the second tank 12, is located in the conduit 18.

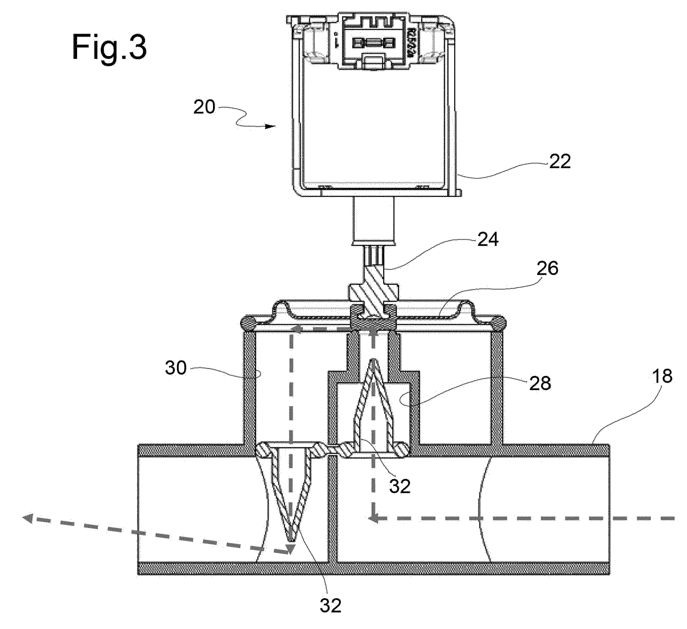

Figure 3 is a schematic illustration of this membrane pump 20, which comprises, in a known way, a reduction gear motor 22 for imparting a reciprocating motion to a piston 24, the distal end of which is connected to an elastic membrane 26 which selectively interrupts the communication between an intake conduit 28 and a delivery conduit 30 which have respective one-way valves 32.

In a known way, the first tank 10 is connected (Figures 1 and 2) to a water distribution device 34, known in the art as an "air-break", which in turn is supplied with mains water through a conduit 36 in which a shut-off valve 38 and a flow meter 40 are positioned. The first tank 10 is further provided with an outlet opening 42 for the softened water.

During the water-softening step (see Figure 1, arrow 44), the water supplied from the distributor device 34 passes through the first tank 10, is softened by the resins therein, and is finally sent to the washing chamber of the electrical household appliance through the opening 42. During this step, there is no flow of water through the conduits 14 and 18 or into the second tank 12.

During the regeneration step (see Figure 2, arrows 46), the pump 20 is activated, thereby creating a flow of water through the second conduit 18 towards the second tank 12. In this tank a brine is formed, this brine flowing through the first conduit 14 into the first tank 10, thus regenerating the resins contained therein. In particular, the regeneration process takes place in a closed loop with continuous recycling of the brine, and can therefore take place simultaneously with the washing cycle of the electrical household appliance with comparatively reduced water consumption.

Clearly, provided that the principle of the invention is retained, the details of construction and embodiments can be varied widely from what has been described purely by way of example, without departure from the scope of the invention.

## Claims

1. Water-softening device for softening water supplied to an electrical household appliance, comprising:
- a first tank (10) for containing substances with water-softening properties,
- a second salt-containing tank (12), having at least one water inlet opening,
- a first conduit (14) which connects the second tank (12) to the first tank (10) and through which a brine formed by the dissolution of the salt in water and intended for regenerating said water-softening substances flows,
- a second conduit (18) connecting the first tank (10) and the second tank (12), and
- at least one pump (20) located in said first or second conduit (14, 18) and intended for selectively causing a water flow in the second conduit (18) from the first tank (10) towards the second tank (12),
said device being **characterised in that** said at least one pump (20) establishes a circular flow in a closed loop formed by said conduits (14, 18) and said tanks (10, 12).

2. Device according to Claim 1, wherein said pump (20) is a peristaltic or membrane pump.

3. Device according to Claim 1 or 2, wherein said second conduit (18) connects the top of the first tank (10) to the bottom of the second tank (12).

4. Device according to any of the preceding claims, wherein said first conduit (14) connects the top of the second tank (12) to the bottom of the first tank (10).

5. Device according to any one of the previous claims, further comprising a one-way valve (16) which is located in the first conduit (14) and prevents a back-flow from the first tank (10) towards the second tank (12).

6. Electrical household washing appliance comprising a water-softening device according to any one of the preceding claims.

## Patentansprüche

1. Wasserenthärtungsvorrichtung zur Enthärtung von Wasser, das einem elektrischen Haushaltsgerät zugeführt wird, wobei die Vorrichtung Folgendes aufweist:
- einen ersten Tank (10) zum Beinhalten von Substanzen mit Wasser enthärtenden Eigenschaften,
- einen zweiten, Salz beinhaltenden Tank (12), der mindestens eine Wassereinlassöffnung hat,
- eine erste Leitung (14), die den zweiten Tank (12) mit dem ersten Tank (10) verbindet und durch die eine Lauge strömt, die durch die Auflösung des Salzes in Wasser gebildet ist und zur Regeneration der Wasser enthärtenden Substanzen bestimmt ist,
- eine zweite Leitung (18), die den ersten Tank (10) und den zweiten Tank (12) verbindet, und
- mindestens eine Pumpe (20), die in der ersten oder zweiten Leitung (14, 18) gelegen ist und bestimmt ist, eine Wasserströmung in der zweiten Leitung (18) von dem ersten Tank (10) in Richtung des zweiten Tanks (12) wahlweise zu bewirken,
wobei die Vorrichtung **dadurch gekennzeichnet ist, dass** die mindestens eine Pumpe (20) eine zirkuläre Strömung in einer geschlossenen Schleife, die durch die Leitungen (14, 18) und die Tanks (10, 12) gebildet ist, einrichtet.

2. Vorrichtung gemäß Anspruch 1, wobei die Pumpe (20) eine Peristaltik- oder Membranpumpe ist.

3. Vorrichtung gemäß Anspruch 1 oder 2, wobei die zweite Leitung (18) das obere Ende des ersten Tanks (10) mit dem Boden des zweiten Tanks (12) verbindet.

4. Vorrichtung gemäß einem der vorausgehenden Ansprüche, wobei die erste Leitung (14) das obere Ende des zweiten Tanks (12) mit dem Boden des ersten Tanks (10) verbindet.

5. Vorrichtung gemäß einem der vorherigen Ansprüche, des Weiteren mit einem Einwegventil (16), das in der ersten Leitung (14) gelegen ist und einen Rückstrom von dem ersten Tank (10) in Richtung des zweiten Tanks (12) verhindert.

6. Elektrisches Haushaltswaschgerät mit einer Wasserenthärtungsvorrichtung gemäß einem der vorhergehenden Ansprüche.

## Revendications

1. Dispositif adoucisseur d'eau pour adoucir de l'eau fournie à un appareil électroménager, comprenant :
- un premier réservoir (10) pour contenir des substances avec des propriétés adoucissantes d'eau,
- un second réservoir (12), contenant du sel, comportant au moins une ouverture d'entrée d'eau,
- un premier conduit (14) qui raccorde le second réservoir (12) au premier réservoir (10) et à travers lequel une saumure, formée par la dissolution du sel dans de l'eau et prévue pour régénérer lesdites substances adoucissantes d'eau, s'écoule,
- un second conduit (18) raccordant le premier réservoir (10) et le second réservoir (12), et
- au moins une pompe (20) située dans ledit premier ou second conduit (14, 18) et prévue pour sélectivement entraîner un écoulement d'eau dans le second conduit (18) à partir du premier réservoir (10) vers le second réservoir (12),
ledit dispositif étant **caractérisé en ce que** ladite au moins une pompe (20) établit un écoulement circulaire dans une boucle fermée formée par lesdits conduits (14, 18) et lesdits réservoirs (10, 12).

2. Dispositif selon la revendication 1, dans lequel ladite pompe (20) est une pompe péristaltique ou à membrane.

3. Dispositif selon la revendication 1 ou 2, dans lequel ledit second conduit (18) raccorde le haut du premier réservoir (10) au bas du second réservoir (12).

4. Dispositif selon l'une quelconque des revendications précédentes, dans lequel ledit premier conduit (14) raccorde le haut du second réservoir (12) au bas du premier réservoir (10).

5. Dispositif selon l'une quelconque des revendications précédentes, comprenant en outre une valve unidirectionnelle (16) qui est située dans le premier conduit (14) et empêche un écoulement de retour à partir du premier réservoir (10) vers le second réservoir (12).

6. Appareil de lavage électroménager, comprenant un dispositif adoucisseur d'eau selon l'une quelconque des revendications précédentes.
